# EUROPEAN PATENT SPECIFICATION

(11) **EP 4 328 100 B1**
(45) Date of publication and mention of the grant of the patent: **02.04.2025**
(21) Application number: 23186815.9
(22) Date of filing: 20.07.2023
(51) Int. Cl.: B60T 1/08

(54) **EMERGENCY BRAKE METHOD AND SYSTEM**
NOTBREMSVERFAHREN UND -SYSTEM
PROCÉDÉ ET SYSTÈME DE FREINAGE D'URGENCE

(30) Priority: 26.07.2022 IT 202200015663
(43) Date of publication of application: 28.02.2024
(73) Proprietor: CNH Industrial Italia S.p.A., 10156 Torino (IT)
(72) Inventor: Garramone, Adriano, 10156 Turin (IT); Venezia, Antonio, 10156 Turin (IT); Gravili, Andrea, 10156 Turin (IT); Liberti, Stefano, 10156 Turin (IT)
(74) Representative: CNH Industrial IP Department

(56) References cited:
- EP-A1- 3 868 620
- WO-A1-87/05574
- DE-A1- 102014 100 625
- DE-A1- 2 759 197
- FR-A1- 2 548 289

## Description

### Field of application of the invention

The present invention relates to an emergency brake method and system.

### State of the art

Vehicles equipped with a hydrostatic drive, such as agricultural and work vehicles, are often used off-road vehicles on rough terrain, such as rocky and/or marshy terrain. Often, they also have to carry large loads, so the service brake can be severely stressed. The service brake comprises friction members designed to contact each other by developing frictional forces.

Typically, a vehicle driven by a hydrostatic drive unit comprises an internal combustion engine which drives a variable displacement pump to supply pressurized oil to a hydraulic motor which drives at least one wheel.

Typically, the service braking action is activated by the user of the vehicle to decrease speed or to stop the vehicle. While, the action of the parking brake typically guarantees the parking position of the vehicle and is controlled by a specific manual lever or button, provided on the dashboard of the vehicle. In heavy vehicles, including those with hydrostatic transmission, the parking brake can be intrinsically safe, SAHR from the Anglo-Saxon acronym "Spring applied hydraulically released brakes". In this type of brakes, an elastic element pushes the brake towards the braking position and a pressurized diaphragm opposes the elastic action, disengaging the parking brake. Therefore, in the absence of pressurization, for example due to a fault, the parking brake is activated automatically. In other words, the engagement condition is the natural condition of the SAHR brake, while its disengagement is forced by means of a pressurized gas.

Document EP 3 868 620 A1 discloses a hydrostatic drive agricultural vehicle, comprising a hydrostatic transmission unit, suitable for vehicle propulsion, one service brake system, a spring-loaded parking brake system SAHR, capable of exerting a parking brake action and a controller configured to automatically activate said parking brake system to complement said service brake system to perform an emergency braking in response to a brake request by the user in conditions of service brake failure. The parking brake operates as an emergency brake in the event of a malfunction of the service brake. In such applications, like the one of EP 3 868 620 A1, the parking brake is activated by means of a proportional valve, usually by an electronic controller, which is activated automatically when a fault is detected in the service brake. The controller activates the emergency brake to complement or replace the service brake.

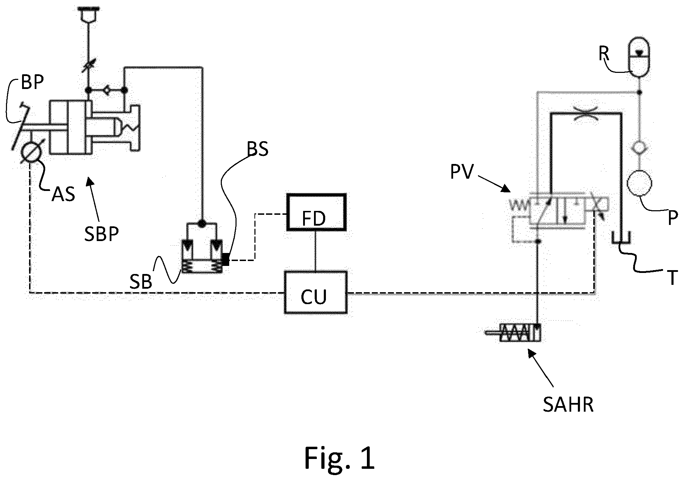

Figure 1 shows an example of an electro-hydraulic circuit that implements the SAHR brake as an emergency brake.

The service brake pedal BP transmits its action to the so-called master piston SBP through which the service brake SB is commanded.

A position sensor AS is associated with the brake pedal BP to detect the extent of the action exerted by the operator on the pedal BP.

Fault detection means FD are operationally connected to the controller CU and monitor the operation of the service brake SB by means of a sensor BS and in the event of a malfunction inform the controller which activates a proportional valve PV according to the position measured by the sensor AS of the brake pedal travel. This sensor can be, for example, a pressure sensor associated with the hydraulic circuit of the service brake.

A pump P feeds a pressure source R connected to the diaphragm of the SAHR via the proportional valve PV. In the deactivation conditions of the proportional valve PV, the diaphragm is connected with the pressure source R, while the braking action provides for the proportional depressurization of the diaphragm of the SAHR with the position of the brake pedal.

However, the reaction times of the service brakes are long. It has been observed that the braking action follows the action on the brake pedal with a minimum delay of more than 1.5 seconds. When the pedal is only partially depressed, the delay of action, on the other hand, can exceed 2.5 seconds. Evidently, with this delay, the operator perceives a situation of helplessness and danger, as the vehicle does not respond adequately to commands.

If not specifically excluded in the detailed description that follows, what is described in this chapter is to be considered as an integral part of the detailed description.

### Summary of the invention

The object of the present invention is to propose a more efficient emergency brake method and system than those known.

The basic idea of the present invention is to simultaneously activate the emergency braking performed by SAHR and the 20 braking performed by the hydrostatic transmission.

This idea is implemented by means of a hydrostatic drive agricultural or work vehicle according to claim 1 and by a method of exerting an emergency brake action according to claim 6.

The dependent claims describe preferred variants of the invention, forming an integral part of this description.

### Brief description of the figures

Further objects and advantages of the present invention will become clear from the following detailed description of an example of its embodiment (and its variants) and from the annexed drawings given purely for explanatory and non-limiting purposes, in which:
Figure 1 shows the set of a service brake system with an emergency and parking brake system of the SAHR type according to the known art;

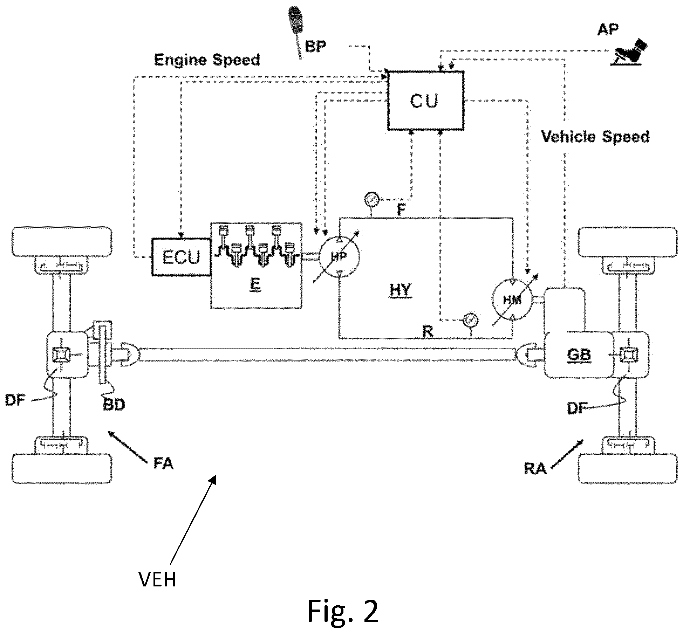

Figure 2 shows an electro-mechanical diagram of a propulsion system based on a hydrostatic transmission, according to the present invention, of a work vehicle comprising the braking systems according to Figure 1;
Figure 3 shows a time diagram showing the combination of the braking action of the SAHR system and hydrostatic braking.

The same reference numbers and letters in the figures identify the same elements or components.

In the context of this description, the term "second" component does not imply the presence of a "first" component. These terms are in fact used as labels to improve clarity and should not be understood in a limiting way.

The elements and features illustrated in the various preferred embodiments, including the drawings, can be combined with each other without however departing from the scope of this application which is defined by the claims.

### Detailed description of preferred embodiments

With reference to Figure 1, a prime mover E, generally an internal combustion engine, drives a variable displacement hydraulic pump HP in rotation, which powers a variable displacement hydraulic motor HM operatively connected to the hydraulic pump defining a so-called hydrostat HY, in which a forward hydraulic line F and a return hydraulic line R interconnect the hydraulic pump with the hydraulic motor.

To better define the diagram in Figure 1, this transmission is referred to as a "series" hydraulic transmission, in the sense that the connection between the prime mover and the vehicle wheels occurs exclusively through the hydrostat.

The displacement of the hydraulic pump is electrically controlled. Generally, there is a map of adjustments of the displacement of the hydraulic pump which allows to control the displacement of the latter as a function of the rotation speed of the prime mover. Typically, the relationship between the pump displacement and the speed of the prime mover is linear and the displacement grows with increasing speed.

The displacement of the hydraulic motor is electrically controlled.

Generally, there is a map of adjustments of the displacement of the hydraulic motor that allows to control the relative displacement according to the pressure that is generated on the forward F and return R hydraulic lines or according to the speed of the vehicle and according to the load perceived by the hydraulic motor.

It is possible to control the hydrostat in order to achieve hydrostatic braking.

This can be achieved, for example, by increasing the displacement of the motor and reducing the displacement of the pump. Under such conditions, the engine HM acts as a hydraulic pump, while the hydraulic pump HP acts as a hydraulic motor.

The kinetic energy is therefore converted into pressure energy which is partially dissipated in the hydrostat and partially dissipated in the frictions of the prime mover which is driven into rotation by the hydraulic pump functioning as a hydraulic motor.

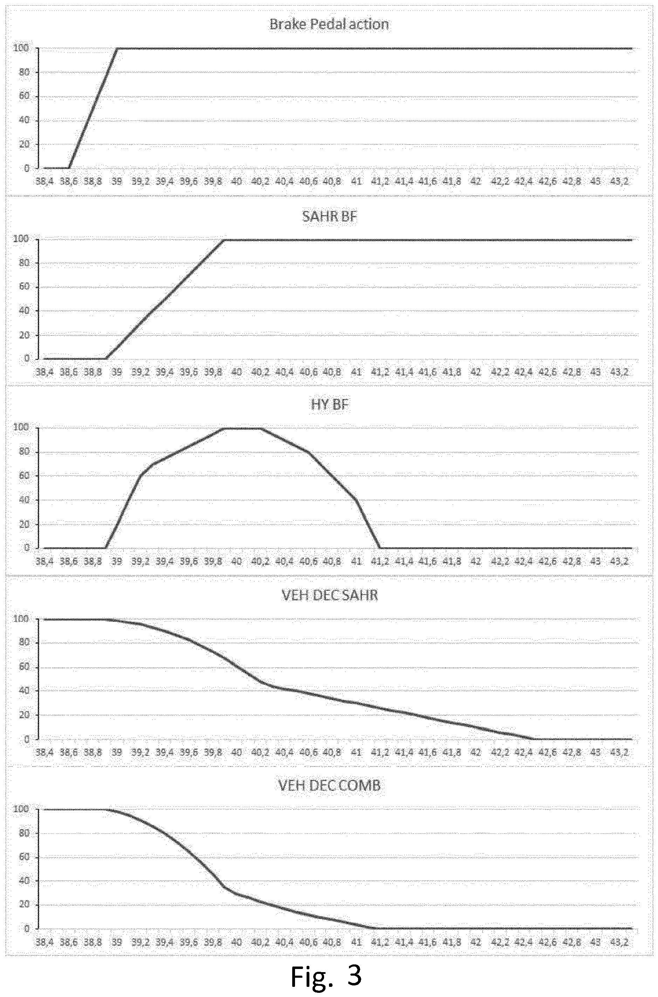

Figure 3 shows time diagrams respectively, from top to bottom:
- Of the action on the brake pedal "Brake Pedal action";
- The braking action exerted by the SAHR system "SAHR BF" in response to the action on the brake pedal;
- The braking action "HY BF" exerted by the hydrostatic transmission in response to the action on the brake pedal;
- The speed of the vehicle "VEH DEC SAHR" thanks to the braking contribution of the SAHR system alone, in response to the action on the brake pedal;
- The vehicle speed "VEH DEC COMB" thanks to the combined braking action of the SAHR system and of the hydrostatic transmission, in response to the action on the brake pedal. It is important to note that not only the vehicle stop earlier, but also the braking is more gradual and above all it starts much earlier than the intervention of the SAHR system alone, avoiding a feeling of helplessness on the operator.

According to the present invention, when the controller CU is configured to calculate information on the status of the service brake action in order to detect a fault of the service brake action and in the event of a fault detection it is configured to execute simultaneously the following operations:
- Hydrostat control to achieve hydrostatic braking,
- Control of the SAHR brake to realize an emergency braking. Since the hydrostat has reaction times lower than the SAHR braking system, then the operator does not perceive the braking delay typical of the failure condition of emergency braking systems based exclusively on the SAHR system.

In other words, the hydrostatic drive VEH agricultural or work vehicle, comprising:
- a hydrostatic transmission unit HY, suitable for propulsion of the VEH vehicle;
- a user interface BP of the service brake SB, adapted to receive a brake request from a user of the vehicle VEH;
- at least one service brake system SB comprising friction elements arranged to brake the vehicle VEH in response to the braking request acquired through the service brake BP user interface;
- at least one SAHR spring-loaded parking brake system, capable of exerting an intrinsically safe parking brake action;
- a controller CU operatively connected with the user interface, with the service brake system SB and with the SAHR spring parking brake system and configured to detect a service brake failure;
the CU controller is configured to automatically activate the SAHR spring-loaded parking brake system to complement the service brake system to perform emergency braking in response to a brake request from the user under service brake failure conditions.

According to the invention,
- the hydrostatic transmission unit HY is suitable for creating a hydrostatic braking system to exert a braking action on the vehicle and
- the controller CU is configured to automatically and simultaneously activate the SAHR spring-loaded parking brake system and said hydrostatic braking system to complement said service brake in response to said brake request by the user in service brake failure conditions.

The controller is operatively connected with a proportional valve PV to activate the spring brake SAHR in proportion to the measure of the position of the brake pedal BP, measured by the sensor AS operatively associated with the service brake pedal.

The controller is configured to adjust the braking torque in proportion to the position of the brake pedal BP, measured by means of the sensor AS operatively associated with the service brake pedal.

It is worth highlighting that the hydrostat has a braking capacity that decreases with the speed of the vehicle and in particular, this capacity is very modest for very low speeds, i.e. below 5 km/h. However, after the vehicle has reduced its speed due to the braking effect of the hydrostat, the contribution of the SAHR becomes operational, creating a natural joint between the braking contributions of the hydrostat and the SAHR system.

In other words, the contribution of the hydrostatic braking system and the contribution of the SAHR system combine over time, although they are activated approximately simultaneously.

The fault detected on the service brake can be signaled to the operator by means of a warning light and/or an acoustic signal. However, thanks to the present invention the braking performances do not undergo any significant variation.

The fault can be detected in several ways, for example by comparing the rate of decrease of the vehicle speed with the position of the brake pedal. Generally, when the service brake is equipped with a hydraulic circuit, the fault is detected by means of a sensor BS associated with the hydraulic circuit to measure the pressure of the fluid inside it.

The present invention can be advantageously carried out by means of a computer program which comprises coding means for carrying out one or more steps of the method, when this program is executed on a computer. Therefore, it is intended that the scope of protection extends to said computer program and further to computer readable means comprising a recorded message, said computer readable means comprising program coding means for carrying out one or more steps of the method, when said program is run on a computer.

Implementation variants of the described non-limiting example are possible, without however departing from the scope of protection of the present invention, which is defined in the claims. From the above description, the person skilled in the art is able to realize the object of the invention without introducing further construction details.

## Claims

1. Hydrostatic drive agricultural or work vehicle (VEH), comprising:
- a hydrostatic transmission unit (HY), suitable for vehicle propulsion (VEH);
- at least one service brake system (SB) comprising friction elements arranged to brake the vehicle (VEH) in response to a braking request;
- a user interface (BP) of the service brake (SB), suitable for receiving said brake request from a vehicle (VEH) user;
- at least one spring-loaded parking brake system SAHR (SAHR), capable of exerting a parking brake action;
- a controller (CU) operatively connected with said user interface, with said service brake system (SB) and with said spring parking brake system SAHR and configured to detect a failure of the service brake;
wherein said controller (CU) is configured to automatically activate said SAHR spring-loaded parking brake system to complement said service brake system to perform an emergency braking in response to a brake request by the user in conditions of service brake failure;
the vehicle being **characterized in that**
- the hydrostatic transmission unit (HY) is configured to create a hydrostatic braking system to exert a braking action on the vehicle and **in that**
- said controller (CU) is configured to automatically and simultaneously activate said SAHR spring-loaded parking brake system and said hydrostatic braking system to complement said service brake in response to said braking request by the user to perform the emergency braking in response to said brake request by the user in service brake failure conditions.

2. Vehicle according to claim 1, wherein said service brake (SB) user interface is a brake pedal (BP) having a stroke, so that the service brake request depends on the position of said brake pedal and wherein at least a first sensor (AS) is associated with the brake pedal to detect the current position of the brake pedal, and wherein said controller is operatively connected with said first sensor (AS) to calculate said service braking request.

3. Vehicle according to claim 1 or 2, comprising at least a second sensor (BS) associated with said service brake, able to detect at least one operating parameter of said service brake and wherein said controller (CU) is operatively connected with said second sensor (BS) and comprises means for detecting a fault (FD) of the service brake on the basis of a signal, generated by said second sensor (BS), function of said at least one operating parameter.

4. Vehicle according to any one of the preceding claims 2 or 3, wherein said service brake (SB) comprises friction material adapted to be applied by means of a thrust force proportional to said position of the brake pedal.

5. Vehicle according to any one of the preceding claims 2 - 4, wherein said SAHR spring-loaded parking brake comprises spring-forced friction material and comprises hydraulic or pneumatic release means arranged to release the parking brake and wherein the parking brake comprises a proportional valve (PV) operatively connected to said controller (CU) and wherein the controller is configured to modulate the activation of the hydraulic or pneumatic release of said spring parking brake as a function of said stroke of said brake pedal in response to said brake request by the user under service brake failure conditions.

6. A method of exerting an emergency braking action in order to slow and/or stop a hydrostatic drive (HY) vehicle (VEH) during a service brake (SB) failure condition, where the brake service includes friction elements arranged to brake the vehicle (VEH) in response to a brake request; the method including, in the event of a service brake failure:
- a first step of automatically activating a SAHR spring parking brake system (SAHR),
- a second step to automatically activate hydrostatic braking,
to exert said braking action, to complement said service brake system, by carrying out said emergency braking, and wherein said first and second steps are performed automatically and simultaneously in response to said braking request.

7. The method according to claim 6, comprising a preliminary step of monitoring at least one operating parameter of the service brake to detect a failure of the service brake.

8. Method according to claim 6 or 7, wherein said activation of the spring-loaded parking brake system and said hydrostatic braking are function of a current position of a service brake pedal through which said request for braking is exerted.

## Patentansprüche

1. Hydrostatisch angetriebenes Landwirtschafts- oder Arbeitsfahrzeug (VEH), mit:
- einer hydrostatischen Getriebeeinheit (HY), die Fahrzeugantrieb (VEH) geeignet ist;
- mindestens ein Betriebsbremssystem (SB) mit Reibungselementen, die dazu eingerichtet sind, das Fahrzeug (VEH) in Reaktion auf eine Bremsanforderung abzubremsen;
- eine Benutzerschnittstelle (BP) des Betriebsbremssystems (SB), die dazu geeignet ist, die Bremsanforderung von einem Benutzer des Fahrzeugs (VEH) zu erhalten;
- mindestens ein SAHR-Federspeicher-Feststellbremssystem (SAHR), das dazu geeignet ist, einen Feststellbremsvorgang auszuführen;
- eine Steuerung (CU), die mit der Benutzerschnittstelle, mit dem Betriebsbremssystem (SB) und mit dem SAHR-Federspeicher-Feststellbremssystem in Wirkverbindung steht und die dazu eingerichtet ist, eine Störung der Betriebsbremse zu detektieren;
wobei die Steuerung (CU) dazu eingerichtet ist, das SAHR-Federspeicher-Feststellbremssystem automatisch zu betätigen, um das Betriebsbremssystem zu ergänzen, um im Falle einer Störung des Betriebsbremssystems einen Notbremsvorgang in Reaktion auf eine Bremsanforderung durch den Benutzer auszuführen;
wobei das Fahrzeug **dadurch gekennzeichnet ist, dass**
- die hydrostatische Getriebeeinheit (HY) dazu eingerichtet ist, ein hydrostatisches Bremssystem zu erzeugen, um einen Bremsvorgang an dem Fahrzeug auszuführen, und
- die Steuerung (CU) dazu eingerichtet ist, das SAHR-Federspeicher-Feststellbremssystem und das hydrostatische Bremssystem automatisch und gleichzeitig zu betätigen, um das Betriebsbremssystem in Reaktion auf die Bremsanforderung durch den Benutzer zu ergänzen, um Bediener im Falle einer Störung des Betriebsbremssystems den Notbremsvorgang in Reaktion auf die Bremsanforderung durch den auszuführen.

2. Fahrzeug nach Anspruch 1, wobei die Benutzerschnittstelle des Betriebsbremssystems (SB) ein Bremspedal (BP) mit einem Hub ist, sodass die Betriebsbremsanforderung von der Position des Bremspedals abhängt, wobei mindestens ein erster Sensor (AS) dem Bremspedal zugeordnet ist, um die Ist-Position des Bremspedals zu detektieren, und wobei die Steuerung mit dem ersten Sensor (AS) in Wirkverbindung steht, um die Betriebsbremsanforderung zu ermitteln.

3. Fahrzeug nach Anspruch 1 oder 2, mit mindestens einem zweiten Sensor (BS), der dem Betriebsbremssystem zugeordnet ist und der dazu in der Lage ist, mindestens einen Betriebsparameter des Betriebsbremssystems zu detektieren, und wobei die Steuerung (CU) mit dem zweiten Sensor (BS) in Wirkverbindung steht und Mittel umfasst, um einen Fehler (FD) des Betriebsbremssystems basierend auf einem Signal, das von dem zweiten Sensor (BS) erzeugt wird, in Abhängigkeit von dem mindestens einem Betriebsparameter zu detektieren.

4. Fahrzeug nach einem der vorhergehenden Ansprüche 2 oder 3, wobei das Betriebsbremssystem (SB) ein Reibungsmaterial umfasst, das dazu eingerichtet ist, mittels einer Schubkraft, die proportional zur Position des Bremspedals ist, beaufschlagt zu werden.

5. Fahrzeug nach einem der vorhergehenden Ansprüche 2 bis 4, wobei das SAHR-Federspeicher-Feststellbremssystem ein feder-beaufschlagtes Reibungsmaterial umfasst und hydraulische oder pneumatische Löseeinrichtungen umfasst, die dazu eingerichtet sind, das Feststellbremssystem zu lösen, wobei das Feststellbremssystem ein Proportionalventil (PV) umfasst, das mit der Steuerung (CU) in Wirkverbindung steht, und wobei die Steuerung dazu eingerichtet ist, die Betätigung der hydraulischen oder pneumatischen Löseeinrichtungen des Federspeicher-Feststellbremssystems in Abhängigkeit von dem Hub des Bremspedals in Reaktion auf die Bremsanforderung durch den Benutzer im Falle einer Störung des Betriebsbremssystems anzupassen.

6. Verfahren zur Ausführung eines Notbremsvorgangs, um ein Fahrzeug (VEH) mit einem hydrostatischen Antrieb (HY) im Falle eines Fehlerzustands des Betriebsbremssystems (SB) zu verlangsamen und/oder anzuhalten, wobei das Betriebsbremssystem Reibungselemente umfasst, die dazu eingerichtet sind, das Fahrzeug (VEH) in Reaktion auf eine Bremsanforderung abzubremsen; wobei das Verfahren im Falle einer Störung des Betriebsbremssystems umfasst:
- einen ersten Schritt des automatischen Betätigens eines SAHR-Federspeicher-Feststellbremssystems (SAHR),
- einen zweiten Schritt des automatischen Betätigens eines hydrostatischen Bremssystems, um den Bremsvorgang auszuführen, um das Betriebsbremssystem durch das Ausführen des Notbremsvorgangs zu ergänzen, und wobei der erste und der zweite Schritt in Reaktion auf die Bremsanforderung automatisch und gleichzeitig ausgeführt werden.

7. Verfahren nach Anspruch 6, umfassend einen vorausgehenden Schritt des Überwachens von mindestens einem Betriebsparameter des Betriebsbremssystems, um eine Störung des Betriebsbremssystems zu detektieren.

8. Verfahren nach Anspruch 6 oder 7, wobei die Betätigung des Federspeicher-Feststellbremssystems und des hydrostatischen Bremsvorgangs abhängig sind von der Ist-Position eines Betriebsbremspedals, durch das die Bremsanforderung ausgeübt wird.

## Revendications

1. Véhicule agricole ou de travail (VEH) à entraînement hydrostatique, comprenant :
- une unité de transmission hydrostatique (HY), adaptée à la propulsion du véhicule (VEH) ;
- au moins un système de frein de service (SB) comprenant des éléments de friction agencés pour freiner le véhicule (VEH) en réponse à une demande de freinage ;
- une interface utilisateur (BP) du frein de service (SB), apte à recevoir ladite demande de freinage de la part d'un utilisateur du véhicule (VEH) ;
- au moins un système de frein de stationnement à ressort SAHR (SAHR), capable d'exercer une action de frein de stationnement ;
- un contrôleur (CU) raccordé fonctionnellement à ladite interface utilisateur, audit système de frein de service (SB) et audit système de frein de stationnement à ressort SAHR et configuré pour détecter une défaillance du frein de service ;
dans lequel ledit contrôleur (CU) est configuré pour activer automatiquement ledit système de frein de stationnement à ressort SAHR afin de compléter ledit système de frein de service pour effectuer un freinage d'urgence en réponse à une demande de freinage de la part de l'utilisateur dans des conditions de défaillance du frein de service ;
le véhicule étant **caractérisé en ce que**
- l'unité de transmission hydrostatique (HY) est configurée pour créer un système de freinage hydrostatique afin d'exercer une action de freinage sur le véhicule et **en ce que**
- ledit contrôleur (CU) est configuré pour activer automatiquement et simultanément ledit système de frein de stationnement à ressort SAHR et ledit système de freinage hydrostatique pour compléter ledit frein de service en réponse à ladite demande de freinage de la part de l'utilisateur pour effectuer le freinage d'urgence en réponse à ladite demande de freinage de la part de l'utilisateur dans des conditions de défaillance du frein de service.

2. Véhicule selon la revendication 1, dans lequel ladite interface utilisateur du frein de service (SB) est une pédale de frein (BP) ayant une course, de sorte que la demande de freinage de service dépend de la position de ladite pédale de frein et dans lequel au moins un premier capteur (AS) est associé à la pédale de frein pour détecter la position actuelle de la pédale de frein, et dans lequel ledit contrôleur est raccordé fonctionnellement audit premier capteur (AS) pour calculer ladite demande de freinage de service.

3. Véhicule selon la revendication 1 ou la revendication 2, comprenant au moins un second capteur (BS) associé audit frein de service, capable de détecter au moins un paramètre de fonctionnement dudit frein de service et dans lequel ledit contrôleur (CU) est raccordé fonctionnellement audit second capteur (BS) et comprend des moyens de détection d'un défaut (FD) du frein de service en fonction d'un signal, généré par ledit second capteur (BS), fonction dudit au moins un paramètre de fonctionnement.

4. Véhicule selon l'une quelconque de la revendication 2 ou de la revendication 3 précédentes, dans lequel ledit frein de service (SB) comprend un matériau de friction adapté pour être appliqué au moyen d'une force de poussée proportionnelle à ladite position de la pédale de frein.

5. Véhicule selon l'une quelconque des revendications 2 à 4 précédentes, dans lequel ledit frein de stationnement à ressort SAHR comprend un matériau de friction forcé par un ressort et comprend un moyen de libération hydraulique ou pneumatique agencé pour libérer le frein de stationnement et dans lequel le frein de stationnement comprend une vanne proportionnelle (PV) raccordée fonctionnellement audit contrôleur (CU) et dans lequel le contrôleur est configuré pour moduler l'activation de la libération hydraulique ou pneumatique dudit frein de stationnement à ressort en fonction de ladite course de ladite pédale de frein en réponse à ladite demande de freinage de la part de l'utilisateur dans des conditions de défaillance du frein de service.

6. Un procédé pour exercer une action de freinage d'urgence afin de ralentir et/ou d'arrêter un véhicule (VEH) à entraînement hydrostatique (HY) pendant une condition de défaillance du frein de service (SB), dans lequel le service de freinage comprend des éléments de friction agencés pour freiner le véhicule (VEH) en réponse à une demande de freinage ; le procédé incluant, dans le cas d'une défaillance du frein de service:
- une première étape d'activation automatique d'un système de frein de stationnement à ressort SAHR (SAHR),
- une seconde étape d'activation automatique du freinage hydrostatique, d'exercer ladite action de freinage, pour compléter ledit système de frein de service, en effectuant ledit freinage d'urgence, et dans lequel ladite première et ladite seconde étape sont effectuées de manière automatique et simultanée en réponse à ladite demande de freinage.

7. Le procédé selon la revendication 6, comprenant une étape préliminaire de surveillance d'au moins un paramètre de fonctionnement du frein de service pour détecter une défaillance du frein de service.

8. Procédé selon la revendication 6 ou la revendication 7, dans lequel ladite activation du système de frein de stationnement à ressort et ledit freinage hydrostatique sont fonction de la position actuelle d'une pédale de frein de service par laquelle ladite demande de freinage est exercée.
